# EUROPÄISCHE PATENTANMELDUNG

(11) **EP 0 741 974 A1**
(43) Veröffentlichungstag der Anmeldung: **13.11.1996**
(21) Anmeldenummer: 96200912.2
(22) Anmeldetag: 14.04.1996
(51) Int. Cl.: A22C 15/00

(54) **Anordnung von Wurstaufhängeschlaufen**

(30) Priorität: 28.04.1995 DE 19515605
(71) Anmelder: POLY-CLIP SYSTEM GmbH & Co. KG, 60489 Frankfurt am Main (DE)
(72) Erfinder: Niedecker, Frank, 65812 Bad Soden (DE)
(74) Vertreter: Fischer, Ernst, Dr.

(57) **Zusammenfassung**

Die Erfindung betrifft eine Anordnung einer Mehrzahl von einzelnen, in sich geschlossenen Wurstaufhängeschlaufen, die nebeneinander von einem Gurt derart gehalten sind, daß zu jeder Seite des Gurtes eine Teilschlaufe übersteht, von denen die erste zum Einlegen in ein Verschlußelement für das Wurstende bestimmt ist, während in die zweite Teilschlaufe ein Rauchspieß oder dergleichen einführbar ist und die sich dadurch auszeichnet, daß die Wurstaufhängeschlaufen (14) in einheitlicher und flacher Form aus elastischem Kunststoff in Strangform bestehen und formtreu sind, und daß die erste Teilschlaufe (22) zwei parallel zueinander verlaufende Abschnitte (24, 26) des Kunststoffstrangs aufweist, welche durch einen senkrecht zu ihnen verlaufenden Querabschnitt (28) des Kunststoffstrangs miteinander verbunden sind.

## Beschreibung

Die Erfindung betrifft eine Anordnung einer Mehrzahl von einzelnen, in sich geschlossenen Wurstaufhängeschlaufen, die nebeneinander von einem Gurt derart gehaltenen sind, daß zu jeder Seite des Gurtes eine Teilschlaufe übersteht, von denen die erste zum Einlegen in ein Verschlußelement für das Wurstende bestimmt ist, während in die zweite Teilschlaufe ein Rauchspieß oder dergleichen einführbar ist.

Würste werden üblicherweise mit Schlaufen versehen, an denen sie aufgehängt werden können um sie weiterzubearbeiten (z.B. zu räuchern) oder zu lagern. Ein Verfahren zum Anbringen solcher Wurstaufhängeschlaufen an der Wurst besteht darin, daß die Wurstaufhängeschlaufen mit einem Ende gleichzeitig mit dem Ende der Wursthülle in einen Verschlußclip eingelegt werden, welcher anschließend geschlossen wird. Dabei werden die einzelnen Wurstaufhängeschlaufen dem Verschlußclip mit Hilfe des Gurtes maschinell zugeführt.

Eine deratige Anordnung von Wurstaufhängeschlaufen wird in der deutschen Patentschrift 2 352 000 beschrieben. Die einzelnen Wurstaufhängeschlaufen sind im Abstand nebeneinander so auf einem Gurt befestigt, daß zu beiden Seiten des Gurtes offene Teilschlaufen überstehen, von denen eine zum Einlegen in ein Verschlußelement für das Wurstende bestimmt ist, während die andere Teilschlaufe beispielsweise auf einen Rauchspieß zu fädeln ist. In der Praxis hat sich gezeigt, daß es bei der bekannten Anordnung von Wurstaufhängeschlaufen immer wieder zu Problemen beim maschinellen Einlegen der Wurstaufhängeschlaufen in den Verschlußclip kommt. Darüber hinaus wird eine weitergehende Automatisierung der Wurstherstellung angestrebt, bei der nicht nur Teilschritte der Produktion, wie beispielsweise das Einlegen der einzelnen Wurstaufhängeschlaufen in die Verschlußclips maschinell durchgeführt, sondern die Würste auch daran anschließend weiter von Automaten gehandhabt werden sollen. Insbesondere sollen die Würste, nachdem sie mit einer Schlaufe versehen worden sind, automatisch auf einen Rauchspieß aufgefädelt werden können.

Der Erfindung liegt die Aufgabe zugrunde, eine Anordnung von Wurstaufhängeschlaufen anzugeben, welche ein unproblematisches Einlegen der Wurstaufhängeschlaufen in Verschlußclips ermöglicht und darüber hinaus die automatische Handhabung der Schlaufen in weiteren Produktionsschritten erlaubt.

Gelöst wird diese Aufgabe durch eine Anordnung von Wurstaufhängeschlaufen der eingangs genannten Art, welche sich dadurch auszeichnet, daß die Wurstaufhängeschlaufen in einheitlicher und flacher Form aus elastischem Kunststoff in Strangform bestehen und formtreu sind und daß die erste Teilschlaufe zwei parallel zueinander verlaufende Abschnitte des Kunststoffstrangs aufweist, welche durch einen senkrecht zu ihnen verlaufenden Querabschnitt des Kunststoffstrangs miteinander verbunden sind.

Die Erfindung weist zunächst alle schon aus der DE-AS 2 352 000 bekannten Vorteile auf, nämlich daß die Schlaufen auf einen Spulenkörper aufgewickelt und von dort maschinell einer Einlegestelle zugeführt werden können. Darüber hinaus erlaubt die Erfindung auch eine weitergehende automatische Handhabung der Würste, weil die Wurstaufhängeschlaufen wegen ihrer Formtreue von Handhabungsgeräten optisch abgetastet werden können. Weiterhin verhindert die Formtreue sowohl Einlegefehler als auch das Verdrehen der Schlaufen, wie es beim Stand der Technik häufiger vorgekommen ist und das Auffädeln der herkömmlichen Fadenschlaufen behindert hat.

Zwar sind aus dem deutschen Gebrauchsmuster 68 09 226 Aufhängeschlaufen bekannt, welche aus Kunststoff bestehen. Diese lassen sich aber nicht vor dem Verschließen eines Verschlußclips in diesen einhängen, sondern müssen von Hand auf die Wurst aufgelegt werden, bevor die Wursthülle zu einem Zopf gerafft wird, so daß diese Aufhängeschlaufen vor dem Setzen und Verschließen eines Verschlußclips das vorangehende Verdrängen der Wurstfüllung und Spreizen der Wursthülle in einer undefinierten Lage mitmachen. Infolgedessen besteht beispielsweise bei einem automatischen Doppelclipverfahren ständig die Gefahr, daß der lange Stiel der Aufhängeschlaufen beim Setzen der Clips von beiden Clips erfaßt wird und dementsprechend später beim Durchtrennen der Wursthülle zweier aufeinanderfolgender Würste zwischen den beiden Clips im Wege ist oder mit durchgetrennt wird. Diese Aufhängeschlaufen sind daher insbesondere für automatisch arbeitende Doppelclipverfahren nicht geeignet.

Demgegenüber ermöglicht die besondere Form der erfindungsgemäßen Aufhängeschlaufen - und ihre Formstabilität - die gewünschte automatische Verarbeitung, indem sie es erlaubt, die Aufhängeschlaufen mit ihren zueinander parallelen Abschnitten so an einem Gurt zu befestigen, daß dieser sich nicht verzieht. Darüber hinaus erlaubt ihr Querabschnitt beim Einlegen oder Einhängen in einen Verschlußclip aufgrund seiner Länge gewisse Positionierfehler bezüglich seiner Längsrichtung, welche in der Regel der Förderrichtung der Aufhängeschlaufen entpricht. Nicht zuletzt kann der Querabschnitt aufgrund der erfindungsgemäßen Schlaufenform quer zur Förderrichtung der Aufhängeschlaufen sehr genau positioniert werden.

Die Wurstaufhängeschlaufen sind vorzugsweise so geformt, daß die zweite Teilschlaufe die Form eines "U" mit konvergierenden, sich aber nicht berührenden Schenkeln hat und sich die parallel zueinander verlaufenden Abschnitte des Kunststoffstrangs an ihrem einen Ende jeweils an einen Schenkel des "U" anschließen. Der U-förmige Abschnitt der Schlaufen ist dabei besonders geeignet, um auf einen Rauchspieß o. dgl. aufgefädelt zu werden.

In einer bevorzugten Variante der Erfindung sind die Wurstaufhängeschlaufen mit ihren zueinander parallelen Abschnitten so an dem Gurt befestigt sind, daß eine Kante des Gurtes in unmittelbarer Nähe des Übergangs der parallelen Abschnitte in die konvergierenden Schenkel der U-förmigen Abschnitte der Wurstaufhängeschlaufen verläuft. Eine derartige Befestigung der Schlaufen bietet zum einen den Vorteil, daß sich ein aus zwei Klebebändern mit einander zugewandten Klebeflächen bestehender Gurt infolge der zwischen den Klebebändern angeordneten Schlaufenabschnitte nicht verzieht; zum zweiten verläuft der Gurt in der beanspruchten Anordnung ganz in der Nähe der Querabschnitte jeder Schlaufe, welche zum Einlegen in die Verschlußmittel bestimmt sind. Auf diese Weise werden Fehler beim Einlegen einer Wurstaufhängeschlaufe in einen Clip durch ungenaue Führung so weit wie möglich vermieden.

Bei einer bevorzugten Ausführungsform der Erfindung beträgt die Länge der parallelen Abschnitte der ersten Teilschlaufe etwa ein Viertel der Gesamtlänge der Wurstaufhängeschlaufen, die größte Breite der Wurstaufhängeschlaufen etwa ein Drittel ihrer Gesamtlänge und der Abstand der parallelen Abschnitte voneinander etwa ein Achtel der Gesamtlänge.

Der Kunststoffstrang hat dabei vorzugsweise durchgehend einen im wesentlichen gleichen Querschnitt und seine Oberfläche ist als Kordelimitat ausgebildet.

Im folgenden soll eine Ausführungsform der Erfindung an Hand der Figuren erläutert werden. Es zeigen:
- Fig. 1: eine Aufsicht auf eine erfindungsgemäße Anordnung von Wurstaufhängeschlaufen;
- Fig. 2: eine Seitenansicht auf eine erfindungsgemäße Anordnung von Wurstaufhängeschlaufen im Schnitt.

Die abgebildete Anordnung von Wurstaufhängeschlaufen 10 weist einem Gurt 12 auf, an dem eine Reihe gleichartiger Wurstaufhängeschlaufen 14 befestigt ist. Der Gurt 12 wird beispielsweise von zwei Papier-oder Kunststoffbändern gebildet, die zwischen sich die einzelnen Wurstaufhängeschlaufen halten. Der Gurt 12 ist in gleichmäßigen Abständen mit Löchern 16 versehen. Der Abstand zwischen zwei Löchern 16 entspricht demjenigen, den die Wurstaufhängeschlaufen 14 voneinander haben. Die Löcher 16 dienen dem getakteten Transport des Gurtes mit den Wurstaufhängeschlaufen.

Die in sich geschlossenen Wurstaufhängeschlaufen 14 werden von einem Kordelimitat aus gespritztem elastischem Kunststoff gebildet und weisen zwei Teilschlaufen 20 und 22 auf, von denen sich die eine Teilschlaufe 20 in den Zeichnungen unterhalb des Gurtes befindet und die Form eines U mit konvergierenden Schenkeln hat, während sich die zweite Teilschlaufe 22 auf den Zeichnungen oberhalb des Gurtes 12 befindet und zwei parallel zueinander verlaufende Abschnitte 24 und 26 des Kordelimitats aufweist,
die mit ihrem einen Ende an die Schenkel des U-förmigen unteren Abschnitts 20 anschließen und an ihrem anderen Ende von einem Querabschnitt 28 des Kordelimitats verbunden werden, welcher senkrecht zu den parallel zueinander verlaufenden Abschnitten angeordnet ist. Das Kordelimitat einer Wurstaufhängeschlaufe 14 hat überall einen annäherd konstanten Querschnitt.

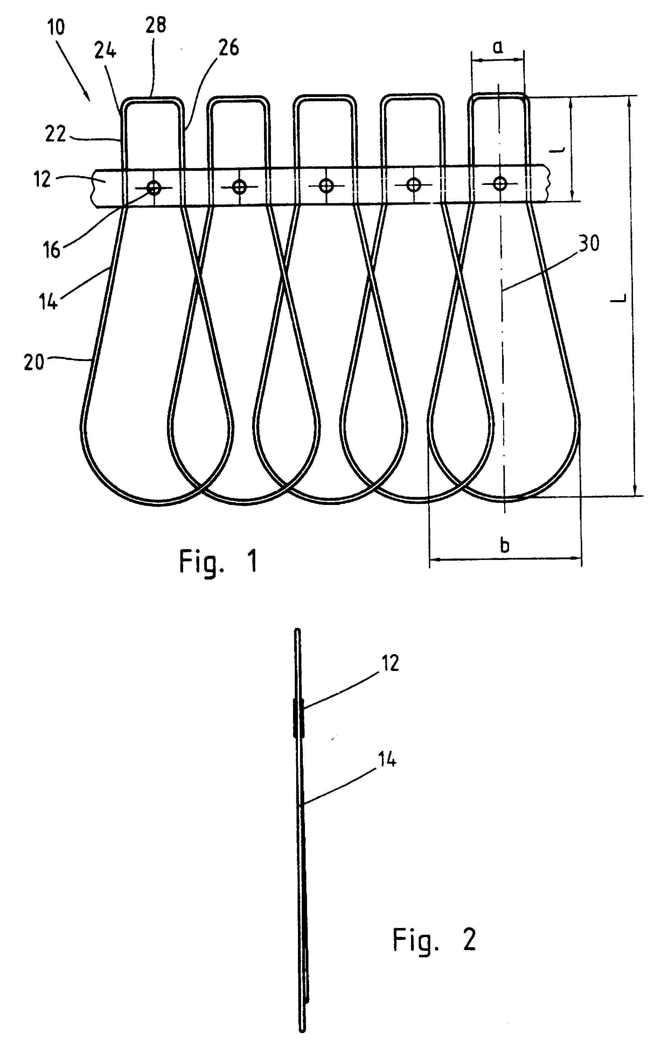

Aus Fig. 2 geht hervor, daß die Wurstaufhängeschlaufen 14 in der Seitenansicht flach sind.

Die Wurstaufhängeschlaufen 14 sind so auf dem Gurt 12 angeordnet, daß ihre Mittelinien 30 parallel zueinander und senkrecht zur Längsrichtung des Gurtes 12 verlaufen. Die Löcher 16 in dem Gurt 12 befinden sich dabei auf dem Schnittpunkt der Mittelinien 30 der Wurstaufhängeschlaufen 14 mit der Mittelinie des Gurtes 12. Der Abstand zwischen benachbarten Wurstaufhängeschlaufen 14 ist so gewählt, daß sich nur die U-förmigen Teilschlaufen 20 unmittelbar benachbarter Wurstaufhängeschlaufen 14 in der Aufsicht (Fig. 1) überschneiden. Die Wurstaufhängeschlaufen 14 sind mit ihren parallelen Abschnitten 24, 26 so an dem Gurt 12 befestigt, daß eine Kante des Gurtes 12 in unmittelbarer Nähe des Übergangs der parallelen Abschnitte 24, 26 in die konvergierenden Schenkel des U-förmigen Abschnittes einer jeden Wurstaufhängeschlaufe 14 verläuft.

Die Länge l der parallelen Abschnitte 24, 26 der Wurstaufhängeschlaufen 14 beträgt etwa ein Viertel ihrer Gesamtlänge L, die größte Breite b etwa ein Drittel ihrer Gesamtlänge L, und der Abstand a der parallelen Abschnitte 24, 26 voneinander etwa ein Achtel der Gesamtlänge L einer Wurstaufhängeschlaufe 24. Die Breite des Gurtes 12 beträgt ungefähr ein Zehntel der Gesamtlänge L einer Wurstaufhängeschlaufe 14.

Bei der Wurstproduktion werden Wurstaufhängeschlaufen 14 mit Hilfe des Gurtes 12 getaktet einem Verschlußautomaten zugeführt. In dem Verschlußautomaten werden die Querabschnitte 28 der oberen Teilschlaufen 22 einer jeden Wurstaufhängeschlaufe 14 zusammen mit einem Ende der Wursthülle in einen Verschlußclip zum Verschließen von Wurstenden eingelegt. Anschließend wird der Verschlußclip geschlossen. Einlege- und Schließfehler werden dabei aufgrund der Lage des Gurtes 12 und der annähernd rechtwinkelingen Form der oberen Teilschlaufe 22 weitgehend vermieden. Die Teilschlaufen 20 der flexiblen Wurstaufhängeschlaufen 14 behalten auch unter Einwirkung der Kräfte, die die Verschlußclips auf die Wurstaufhängeschlaufen 14 ausüben, annähernd ihre ursprüngliche Form, so daß sie leicht beispielsweise auf einen Rauchspieß aufgefädelt werden können. Dabei kann das Transportieren und Auffädeln der Würste mit den Wurstaufhängeschlaufen 14 von automatischen Handhabungsgeräten übernommen werden, die mit einer optischen Abtastung arbeiten, welche in der Lage ist, die an den Würsten befestigten Wurstaufhängeschlaufen optisch so zu erfassen, daß das Handhabungsgerät mit Hilfe der optischen Abtastung gesteuert werden kann. Die Erfindung ermöglicht somit eine wesentlich weitergehende Automatisierung der Wurstproduktion, als dies bisher der Fall ist.

## Patentansprüche

1. Anordnung einer Mehrzahl von einzelnen, in sich geschlossenen Wurstaufhängeschlaufen, die nebeneinander von einem Gurt derart gehalten sind, daß zu jeder Seite des Gurtes eine Teilschlaufe übersteht, von denen die erste zum Einlegen in ein Verschlußelement für das Wurstende bestimmt ist, während in die zweite Teilschlaufe ein Rauchspieß oder dergleichen einführbar ist,
**dadurch gekennzeichnet,** daß die Wurstaufhängeschlaufen (14) in einheitlicher und flacher Form aus elastischem Kunststoff in Strangform bestehen und formtreu sind, und daß die erste Teilschlaufe (22) zwei parallel zueinander verlaufende Abschnitte (24, 26) des Kunststoffstrangs aufweist, welche durch einen senkrecht zu ihnen verlaufenden Querabschnitt (28) des Kunststoffstrangs miteinander verbunden sind.

2. Anordnung von Wurstaufhängeschlaufen nach Anspruch 1, **dadurch gekennzeichnet,** daß die zweite Teilschlaufe (20) die Form eines "U" mit konvergierenden, sich aber nicht berührenden Schenkeln hat und sich die parallel zueinander verlaufenden Abschnitte (24, 26) des Kunststoffstrangs an ihrem einen Ende jeweils an einen Schenkel des "U" anschließen.

3. Anordnung von Wurstaufhängeschlaufen nach Anspruch 2, **dadurch gekennzeichnet,** daß die Wurstaufhängeschlaufen (14) mit ihren zueinander parallelen Abschnitten (24, 26) an dem Gurt (12) so befestigt sind, daß eine Kante des Gurtes (12) in unmittelbarer Nähe des Übergangs der parallelen Abschnitte (24, 26) in die konvergierenden Schenkel der U-förmigen Abschnitte der Wurstaufhängeschlaufen (14) verläuft.

4. Anordnung von Wurstaufhängeschlaufen nach einem der Ansprüche 2 oder 3,
**dadurch gekennzeichnet,** daß die Länge (l) der parallelen Abschnitte der ersten Teilschlaufe (22) etwa ein Viertel der Gesamtlänge (L) der Wurstaufhängeschlaufen (14) beträgt, die größte Breite (b) der Wurstaufhängeschlaufen (14) etwa ein Drittel ihrer Gesamtlänge (L) und der Abstand (a) der parallelen Abschnitte (24, 26) voneinander etwa ein Achtel der Gesamtlänge (L) beträgt.

5. Anordnung von Wurstaufhängeschlaufen nach einem der vorstehenden Ansprüche,
**dadurch gekennzeichnet,** daß der Kunststoffstrang durchgehend einen im wesentlichen gleichen Querschnitt hat und seine Oberfläche als Kordelimitat ausgebildet ist.
